# EUROPEAN PATENT SPECIFICATION

(11) **EP 2 366 583 B1**
(45) Date of publication and mention of the grant of the patent: **04.07.2012**
(21) Application number: 11155810.2
(22) Date of filing: 24.02.2011
(51) Int. Cl.: B60N 2/44, B60N 2/66, B60R 22/00

(54) **A device and a method for supporting a person in a driving position**
Vorrichtung und Verfahren zur Unterstützung einer Person in einer Fahrposition
Dispositif et procédé permettant de supporter une personne en une position de conduite

(30) Priority: 05.03.2010 IT RE20100015
(43) Date of publication of application: 21.09.2011
(73) Proprietor: Zarae di Bovi Fabio, 42045 Luzzara (Reggio Emilia) (IT)
(72) Inventor: Bovi, Fabio, 42045, LUZZARA (REGGIO EMILIA) (IT)
(74) Representative: Corradini, Corrado

(56) References cited:
- WO-A1-89/06149
- DE-A1-102007 029 572
- US-A- 4 145 074
- US-A- 4 487 201
- US-A1- 2005 088 030

## Description

The present invention relates to a device and a method for supporting a person's body when at the driving position of a vehicle.

As is known, persons who spend a long time sitting at the driving position of a vehicle can suffer from considerable pain to the back, especially the lumbar region.

These pains are often caused by the fact that the backrest of the driving seat does not provide the correct rest support for the back, such that the spinal column of the driver has to support practically all the weight of the trunk and head, unloading this weight onto the hips and thereafter to the buttocks.

This situation is made more serious by the fact that the driver often assumes a poor posture on the seat, which loads the back wrongly, and the seat does not offer the driver much chance of moving in order to take on a more comfortable position.

In particular, the US Patent nr. US 4,145,074 and the International Patent Application nr. WO 89/06149 disclose respectively a device for supporting a person's body accommodated in the driving position of a vehicle according to the preamble of the claim 1.

Nevertheless, theses known devices have the drawback that they must be secured at the top of the vehicle, and the top of the vehicle needs to be accordingly adjusted; such adjustment operations make the use of such devices very difficult and laborious, and moreover, when these devices are required to be used, these adjustments make the vehicle unaesthetic.

The aim of the present invention is to resolve or at least reduce the above-mentioned problems.

A further aim of the invention is to attain the above-mentioned objective in the ambit of a simple, rational and relatively inexpensive solution.

These aims are attained by the characteristics of the invention reported in the independent claims. The dependent claims delineate preferred and/or especially advantageous aspects of the invention.

In particular, the invention makes available a device for supporting a body of a driver in a driving position of a vehicle. Said device comprises binding means designed to be fastened to a trunk of a driver's body and connecting means designed to connect the binding means to an element of a vehicle. Said element is located at a higher position than the driver's trunk when the driver is in the driving position, and is suitable to be placed in tension so that at least a part of a body-weight of the driver depends on the element of the vehicle. Said connecting means are further associated to anchoring means suitable to be removably fastened to the element of the vehicle.

According to the invention said element of the vehicle is an head-rest of a seating of the vehicle and said anchoring means comprise a hood suitable to be applied over the head-rest. Thanks to this solution, the backbone of the driver is relieved of a part of the weight which it would normally have to support, thus being less stressed and thus also preventing, or at least reducing, the onset of pain, even when the driver remains sitting in the driving position for a long time.

The device further obliges the driver to maintain her or his back straight, causing her or him to assume a more correct posture which further reduces the onset of pain.

Moreover, the anchoring means prevent the support device from acting directly on the head-rest, so as to prevent the head-rest from being damaged or having to be modified in order to enable coupling with the connecting means.

Further, the anchoring means, i.e. the hood, enable a rapid mounting and demounting of the device to and from the vehicle and possibly a repositioning thereof on another vehicle, so that the hood can be applied and removed very simply and rapidly, and can be used with a very wide range of headrests, without the need, at the same time, of any adjustment of the vehicle or of the head-rest of the seating.

In an embodiment of the invention, the binding means comprise a band designed to be wound around the trunk of the body.

This solution has the advantage of enabling the driver to wear and remove the device simply and rapidly, without causing undue annoyance.

In a preferred aspect of the invention, the above-mentioned band is elastic.

In this way, it can constrict the trunk of the driver effectively without excessively constricting it and in any case ensuring a greater level of comfort.

In an embodiment of the invention, the band is open and comprises releasable fastening means designed to keep the band ring-wound.

With this solution, the driver has no need of wearing the band in the strict sense, as it can be simply wound about the trunk of the body and thus can be fastened with the fastening means, substantially like a belt.

A preferred aspect of the invention is that the fastening means can be adjusted, such as to be able to vary the circumference of the ring of the band. In this way, the band can be tightened or loosened, such as to be adapted to the size of the trunk of various drivers.

In an embodiment of the invention, the device comprises at least a further elasticated element projectingly fixed to the elasticated band, and releasable fastening means such as to fasten the free end of the further elastic element in adjustable positions on the elasticated band itself, such that the further elasticated element at least partially envelops the trunk of the body.

This further elastic element has the advantage of enabling a further and more precise adjustment of the binding effect of the elasticated band about the driver's body.

In a further embodiment of the invention, the fastening means are destined to connect the binding means to a head-rest of a vehicle seat.

The head-rest of the seat is always higher than the driver's trunk, and further constitutes a comfortable and valid rest element on which to apply the support device.

In a further aspect of the invention, the connecting means comprise at least a brace destined to be hung from the above-mentioned element of the vehicle.

The use of braces has the advantage of enabling an effective support for the driver's body, without limiting the body's freedom of movement, nor impeding the driver's view while driving.

In more detail, the connecting means preferably comprise at least a pair of braces destined to be hung to the element of the vehicle.

This solution has the advantage of better supporting the driver's body, and of offering greater equilibrium.

In an aspect of the invention, the two braces are crossed over one another.

The crossing-over improves the stability of the driver and facilitates keeping the braces in a correct position both with respect to one another and with respect to the element of the vehicle from which they hang during the use of the device.

In a further aspect of the invention, each brace is slidably associated to anchoring means which are destined to be removably fixed to the element of the vehicle.

In this way, the braces do not directly act contactingly with the element of the vehicle from which they hang, preventing the vehicle element from being damaged.

Further, the braces are in this way constrained to anchoring means, such that they cannot be displaced with respect to the element of the vehicle from which they hang; thus they at all times maintain a correct position during use thereof.

In particular, in a preferred aspect of the invention each brace is slidably inserted in a guide sleeve which is fixed to the anchoring means.

The guide sleeve improves protection of the element of the vehicle, as well as improving the sliding of the braces, also increasing the driver's comfort.

In a preferred aspect of the invention, the anchoring means are provided with a pair of the guide sleeves, which are singly associated to a respective brace and are crossed-over one another.

In this way, the cross-over of the braces is guided by the sleeves at the position of the anchoring means with the element of the vehicle, effectively increasing the stability of the support device during use.

In an embodiment of the invention, each brace exhibits a portion which is fixed to the binding means and a free portion, and further includes releasable fastening means for selectively gripping the free portion of the brace to the binding means.

This solution has the advantage of enabling the driver to put the support device on very rapidly and simply.

In a preferred aspect of the invention, the fastening means are adjustable such that the fastening point of the free portion of the brace to the binding means can be varied.

Varying the fastening point enables adapting the braces to the dimensions of the bodies of many drivers, as well as varying the tension of the braces themselves, such as to adjust the support exerted by the device on the driver.

In a further aspect of the invention, each brace is elastic.

This detail has the advantage of improving the functionality of the braces and the comfort for the user.

In a further preferred aspect of the invention, each brace comprises signalling means of the tension of the brace.

As each brace generally has to exert an even supporting action on the binding means, this solution provides the driver with the option of adjusting and controlling that the tension of the braces is indeed the same.

In an embodiment of the invention, the signalling means comprise a plurality of visible elements arranged in succession along the longitudinal development of the brace, and a guide sleeve destined to be blocked on the element of the vehicle, in which guide sleeve the brace is slidably inserted.

In this way, the tension of the brace is proportional to the number of visible elements which project from the guide sleeve, which thus provide a valid indication of the tension on the brace.

This solution has the advantage of being very simple and easily to understand.

In general, the invention also provides a method for supporting the body of a person in the driver's position, which comprises stages of predisposing a device according to any of the aspects and embodiments mentioned above, fastening the binding means of the device to the trunk of the body, connecting the connecting means to an head-rest of the vehicle which is located higher than the trunk of the body when the person is in a driving position, applying the hood over the head-rest, and tensioning the connecting means such as to cause at least a part of the body's weight to bear on that head-rest.

Further characteristics and advantages of the invention will emerge from a reading of the following description, provided by way of non-limiting example, with the aid of the figures illustrated in the accompanying tables of drawings.
Figure 1 illustrates the use of a support device according to the present invention.
Figure 2 is a plan-view illustration of the development of the internal or front side of the support device of figure 1, i.e. the side in direct contact with the driver's body.
Figure 3 is a plan-view illustration of the opposite external or posterior side of the device of figure 1.

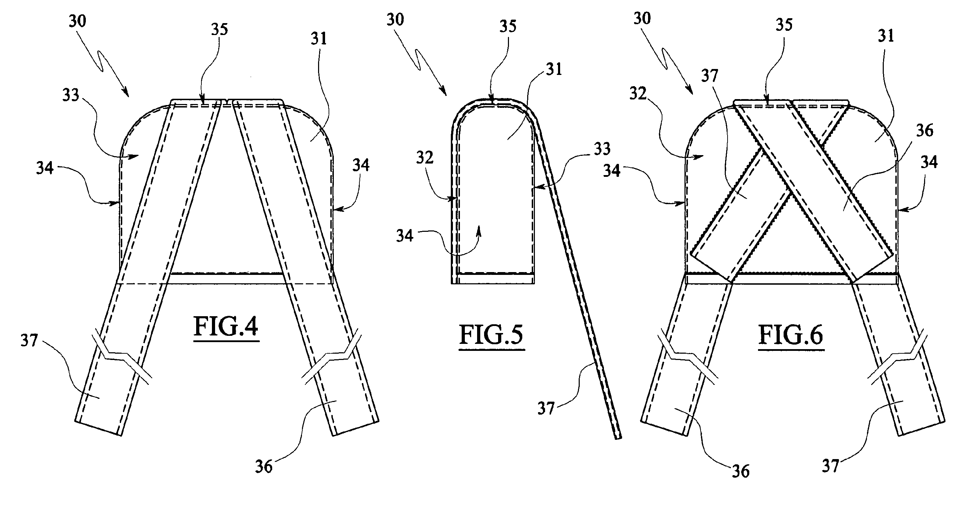

Figure 4 is a view of the front part of the anchoring means of the device of figure 1.
Figure 5 is a perpendicular projection of figure 4, showing the lateral view of the anchoring means.
Figure 6 is a perpendicular projection of figure 5, showing the posterior view of the anchoring means.

The figures illustrate a device 10 for supporting a driver's body 100 seated at the driving position of a vehicle, typically a motor vehicle.

The driver's position comprises a seat 101 on which the driver 100 sits in order to reach the vehicle controls, in the example represented by a steering wheel 102.

The seat 101 further comprises a back-rest 103, at a top of which there is a head-rest 104.

The driver's body 100 is represented in the figures by a doll.

The support device 10 comprises a flexible elasticated band 11 designed to be stretched about the trunk of the driver's body 100, preferably about the trunk, such as to bind the body 100 quite firmly, i.e. such that the band 11 remains substantially blocked in a fixed position.

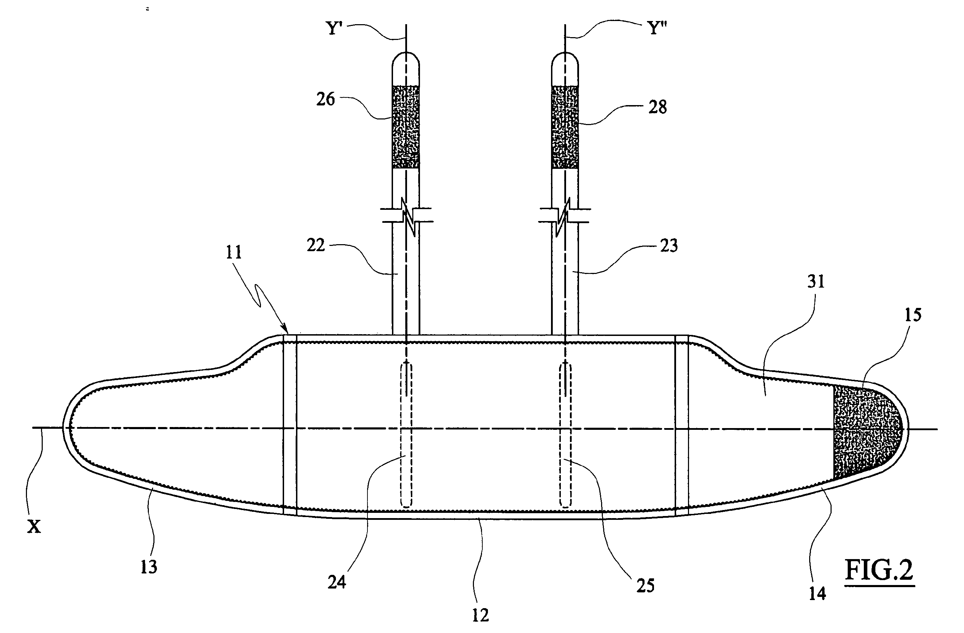

As illustrated in figure 2, the elasticated ban 11 is open, i.e. it can develop in plan view along a longitudinal axis X thereof.

The elasticated band 11 comprises a central portion 12 destined to be applied to the driver's 100 back, and two opposite lateral portions 13 and 14 destined to be wound about the driver's 100 sides, to close on one another about the chest of the driver 100, thus forming a ring which completely surrounds the driver's trunk.

When the driver 100 puts the elasticated band 11 on, the lateral portion 14 envelops her or his left side, while the lateral portion 13 does the same for the right side.

The free end of the lateral portions 13 and 14 are provided with a releasable fastening system of the Velcro type, which enables them to be fastened to one another, such as to keep the elasticated band 11 closed.

A Velcro type system relates in general to a system which comprises a first layer of textile, commonly known as a Velcro strip, which is provided with small flexible hooks which enmesh upon applied pressure in thickly-arranged loops arranged on a second layer of textile, usually a velour-type textile.

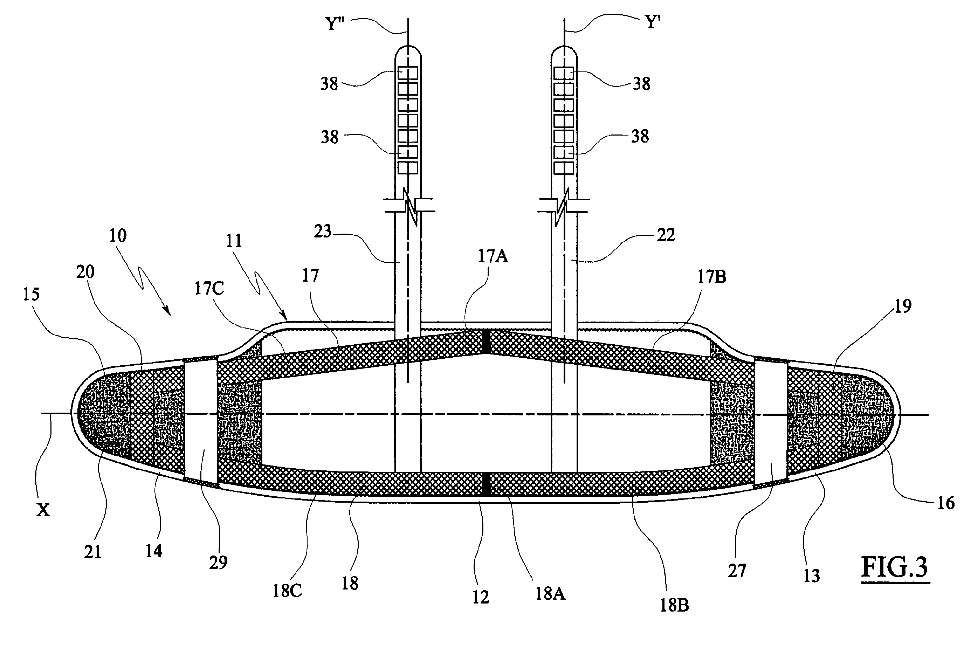

In the specific case, the free end of the lateral portion 14 is provided with a strip of Velcro 15, which is applied on the internal or anterior side of the lateral portion 14 (see figure 2) and is destined to be fixed on a larger strip of velour 16, which is applied on the external or posterior side of the free end of the lateral portion 13 (see figure 3).

To close the elasticated band 11, the driver 100 will therefore have to place the right lateral portion 13 on her or his chest and then close the left lateral portion 14 onto the right portion 13, fastening it with the Velcro.

Thanks to the Velcro system, the point of fastening between the lateral portions 13 and 14 can be varied, for example in order to regulate the diameter of the ring formed by the elasticated band 11 about the trunk of the driver's body, tightening it more or less according to needs.

Naturally the Velcro fastening system can be replaced by any other suitable system for enabling adjustment of the circumference of the elasticated band 11, for example by a conventional buckle system.

As illustrated in figure 3, two further flexible elasticated bands, an upper band 17 and a lower band 18, are associated to the elasticated band 11.

The further elasticated bands 17 and 18 are almost parallel to the elasticated band 11 and are joined to one another by two opposite end flaps 19 and 20.

The elasticated bands 17 and 18 are fixed on the external or posterior sides of the elasticated band 11 only by sewed beads 17A and 18A located at the central portion 12.

In this way, the sewed beads 17A and 18A centrally subdivide each elasticated band 17 and 18 into two separate strips, respectively denoted by 17B and 17C and 18B and 18C, each of which is independently and projectingly fixed to the central portion 12 of the elasticated band 11.

In particular, the strips 17B and 18B face the lateral portion 13 of the elasticated band 11 and are reciprocally joined by the end flap 19, while the strips 17C and 18C face the lateral portion 14 and are reciprocally joined by the end flap 20.

The end flaps 19 and 20 are predisposed to be respectively fastened to the lateral portions 13 and 14 by means of a releasable fastening system of the Velcro type.

In particular, the end flaps 19 and 20 are provided with a layer of Velcro (not visible) which enables them to be fastened on the layer of velour 16 of the lateral portion 13, and on a further layer of velour 21 which is applied on the lateral portion 14.

Thanks to the Velcro system, the point of fastening between the end flaps 19 and 20 and the lateral portions 13 and 14 can be varied, thus varying the tension of the pairs of elasticated bands 17B, 18B and 17C, 18C, for example for further adjusting the embracing effect of the elasticated band 11 about the driver's trunk.

This adjustability option is improved by the fact that the tension of the pairs of elasticated bands 17B, 18B and 17C, 18C can be varied independently of one another.

The support device 10 further comprises a pair of braces 22 and 23.

The braces 22 and 23 are made of a flexible elastic material, for example using the same material the elasticated band 11 is made of.

As illustrated in figure 3, an end portion of each brace 22 and 23 is fastened, for example by sewing, on the external or posterior side of the central portion 12 of the elasticated band 11, where there is also a respective reinforcing element or plastic element 24 and 25 for supporting the elasticated band 11 itself (illustrated by a broken line in figure 2).

In this way, each brace 22 and 23 exhibits a long free portion.

The free portions of both braces 22 and 23 have the same length and develop on a same side with respect to the elasticated band 11, along respective longitudinal axes Y' and Y" which are substantially perpendicular to the longitudinal axis X of the elasticated band 11.

The free ends of the braces 22 and 23 are provided with a Velcro-type releasable fastening system, which enables them to be fastened on the elasticated band 11 when the latter is tightened about the driver 100.

In particular, the free end of the brace 22 is provided with a strip of Velcro 26, which is applied on the internal or anterior side of the brace 22 (see figure 2) and is destined to be fastened on a strip of velour 27, which is applied on the external or posterior side of the lateral portion 13 (see figure 3).

Likewise, the free end of the brace 23 is provided with a strip of Velcro 28, which is applied on the internal or anterior side of the brace 23 (see figure 2) and is destined to be fastened on a further velour strip 29, which is applied on the external side of the lateral portion 14 (see figure 3).

In this way, the fastening point of the free portion of each brace 22 and 23 can be varied with respect to the respective strip 27 and 29, in particular in the direction defined by the respective longitudinal axes Y' and Y", in order to change the tension of the braces 22 and 23, as will be more fully described herein below.

In this case too, the Velcro fastening system can be replaced by any other suitable system for enabling adjustment of the fastening point of the braces 22 and 23, for example a convention buckle system.

Note that the strips 27 and 29 are sewn to the elasticated band 11 only at ends thereof, thus defining two eyes through which the pairs of elasticated strips, respectively 17B, 18B and 17C, 18C (previously-described) can be threaded.

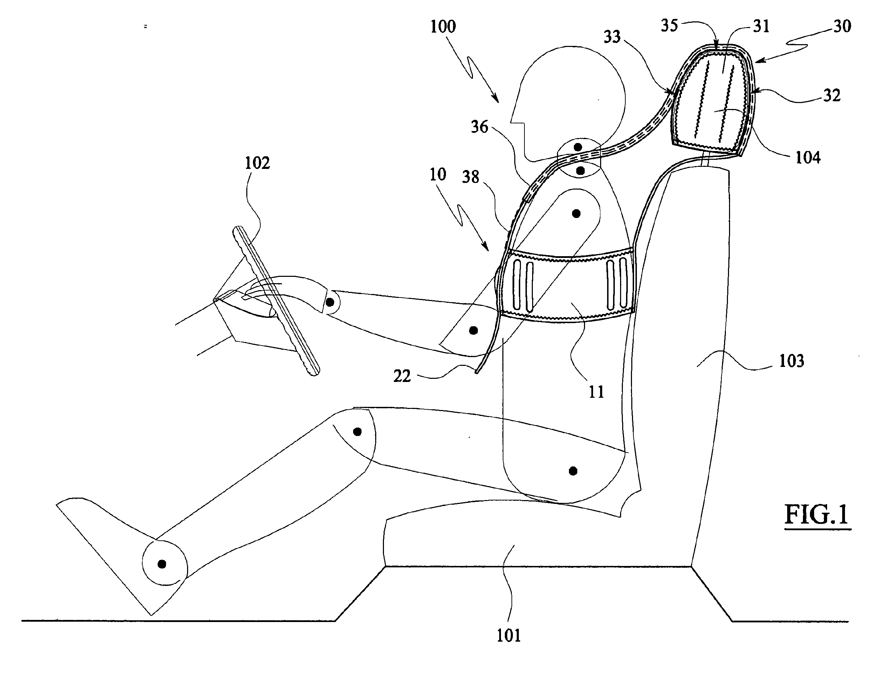

The support device 10 further comprises an anchoring element 30, illustrated in figures from 4 to 6, which is destined to be fastened removably to the head-rest 104 of the seat 101 of the vehicle (see figure 1).

In particular, the anchoring element 30 comprises a soft hood 31, substantially exhibiting the shape of an envelope which, via an appropriate opening, is destined to be applied over the head-rest 104 such as to cover it.

The hood 31 is preferably made of an elasticated material, such as to be able to adhere to the external surface of the head-rest 104 and remain stably fixed thereto.

In more detail, the hood 31 exhibits two large opposite portions, of which one is a posterior portion 32 destined to cover the back of the head-rest 104, and a front portion 33 destined to cover the front part thereof; two lateral bands 34 destined to cover the flanks of the head-rest 104; and an upper band 35 destined to cover the top of the head-rest 104; the opening of the hood 31 is opposite the upper band 35.

The anchoring element 30 further comprises a pair of flexible sleeves 36 and 37.

An end portion of each sleeve 36 and 37 is fastened to the hood 31, for example by sewing, while the remaining portion remains free.

The free portions of both sleeves 36 and 37 have the same length and develop in the same direction.

In particular, the sleeves 36 and 37 initially develop starting from the posterior portion 32 of the hood 31 towards the upper band 35.

At the posterior portion 32, the sleeves 36 and 37 are reciprocally inclined such as to cross over, one passing over the other.

After the intersection zone, the sleeves 36 and 37 pass above the upper band 35, where they turn downwards, facing the front portion 33 of the hood 31.

The sleeves 36 and 37 are sewn to the hood 31 at the posterior portion 32, the upper band 35 and partially also the front portion 33.

In use (see figure 1), the hood 31 is fitted on the head-rest 104 of the driver's seat 102, while the elasticated band 11 is positioned on the part of the seat 101 which the driver 100 will sit in.

The braces 22 and 23 are passed into the space, where it is present, between the top of the back-rest 103 and the head-rest 104 or alternatively the braces are passed on the top of the back-rest 103 laterally with respect to the head-rest 104, and are threaded into the sleeves, respectively 36 and 37.

The sleeves 36 and 37 guide and constrain the braces 22 and 23 to pass behind the head-rest 104, where they cross, and above the top thereof, and then newly descend into the front part of the seat 101.

In this way, both the braces 22 and 23 are substantially hanging from the head-rest 104.

Finally, the free ends of the braces 22 and 23 are made to project from the sleeves 36 and 37.

The driver 100 sits on the driver's seat 100 and pulls the elasticated band 11 about her or his body, such that the central portion 12 is positioned at the back position and the lateral portions 13 and 14 close over his or her chest, as described herein above.

At this point, the driver 100 can thread the pairs of elasticated bands 17B, 18B and 17C, 18C through the eyes and, after having pulled them tense, can fasten the end flaps 19 and 20 on the elasticated band 11.

The driver 100 then rests the free portions of the sleeves 36 and 37 on his or her shoulders and grips the projecting portions of the braces 22 and 23.

At this point, the driver 100 pulls the braces 22 and 23 which are free to slide in the sleeves 36 and 37, tensions them and finally fastens them on the front of the strips 27 and 29 of the elasticated band 11.

As the head-rest 104 is at a higher level than the driver's trunk, the tensioning of the braces 22 and 23 means that a part of the weight of the driver's body is transmitted to the head-rest 104.

In this way, the driver's spine is freed of a part of the weight which it would normally support, as it is less stressed; this prevents or at least reduces the onset of pain, even where the driver 100 is a long time in the driving position.

The support offered by the device 10 naturally depends on the entity of the tension applied to the braces 22 and 23, which can be appropriately adjusted by varying the fastening point of the free ends of the braces 22 and 23 and with the strips 27 and 29 of the elastic band 11.

For a correct functioning of the support device 10 it is of considerable importance that both the braces 22 and 23 are always subjected to the same degree of tension.

To enable the driver 100 to achieve this situation, each brace 22 and 23 comprises tension-indicating means.

As illustrated in figure 3, the tension-indicating means of each brace 22 and 23 comprise a plurality of visible indicating elements 38 which are arranged in succession along the longitudinal axis of the brace at the terminal tract thereof destined to project with respect to the respective sleeve 36 and 37 (see also figure 1).

In this way, the tension of each brace 22 and 23 is proportional to the number of visible elements 38 which project from the relative sleeve 36 and 37.

The driver 100 can thus count the number of visible elements 38 which effectively project, and fasten the braces 22 and 23 when this number is the same for both.

In order further to facilitate the operation, the visible elements 38 can have different colours, such that the driver 100 can fasten the braces 22 and 23 simply when the first visible element 38 of each braces, i.e. the closest visible element 38 to a relative sleeve, is of the same colour as the first visible element 38 of the other sleeve.

Naturally a technical expert in the sector might apply numerous modifications of a technical-applicational nature to the support device 10 as described herein above, without its forsaking the ambit of protection of the invention as claimed herein below.

## Claims

1. A device for supporting a body of a driver (100) in a driving position of a vehicle, comprising binding means (11) designed to be fastened to a trunk of a driver's body and connecting means (22, 23) designed to connect the binding means (11) to an head-rest (104) of a seating (103) of a vehicle which head-rest (104) is located at a higher position than the driver's trunk when the driver (100) is in the driving position, and destined to be placed in tension in order for at least a part of a body-weight of the driver (100) to depend on the head-rest (104) of the vehicle, wherein said connecting means (22, 23) are associated to anchoring means (30) suitable to be removably fastened to the head-rest (104) of the vehicle, **characterized in that** said anchoring means (30) comprise a hood (31) suitable to be applied over the head-rest (104).

2. The device of claim 1, wherein the binding means comprise a band (11) destined to be wound about the trunk of the driver's body.

3. The device of claim 2, wherein the band (11) is elasticated.

4. The device of claim 2, wherein the band (11) is open and comprises releasable fastening means (15, 16) destined to keep the band closed in a ring-wound closure configuration.

5. The device of claim 4, wherein the fastening means (15, 16) are adjustable such as to vary a circumference of the ring-wound band.

6. The device of claim 2, comprising at least a further elasticated element (17B 17C, 18B, 18C) projectingly fixed to the elasticated band (11), and releasably fastenable means (16, 19, 20,21) for fastening a free end of the further elasticated element (17B, 17C, 18B, 18C) in an adjustable position on the elasticated band (11), such that the further elasticated element (17B, 17C, 18B, 18C) at least partially envelops the trunk of the body.

7. The device of claim 1, wherein the connecting means (22, 23) are destined to connect the binding means (11) to a head-rest (104) of a seat (101) of the vehicle.

8. The device of claim 1, wherein the connecting means comprise at least a brace (22, 23) destined to be hung from the head-rest (104).

9. The device of claim 8, wherein the connecting means comprise at least a pair of braces (22, 23) destined to be hung from the head-rest (104).

10. The device of claim 9, wherein the braces (22, 23) are crossed one over another.

11. The device of claim 8, wherein each brace (22, 23) is slidably associated to said anchoring means (30).

12. The device of claim 11, wherein each brace (22, 23) is slidably inserted in a guide sleeve (36, 37) which is fastened to the hood (31).

13. The device of claim 12, wherein the hood (31) is provided with a pair of the guide sleeves (36, 37), which are singly associated to a respective brace (22, 23) and are crossed one over another.

14. The device of claim 8, wherein each brace (22, 23) exhibits a portion which is fastened to the binding means (11) and also exhibits a free portion, releasable fastening means (26, 27, 28, 29) being provided for fastening the free portion of the brace (22, 23) to the binding means (11).

15. The device of claim 14, wherein the fastening means (26, 27, 28, 29) are adjustable such as to vary a point of fastening of the free portion of the braces (22, 23) to the binding means (11).

16. The device of claim 8, wherein each brace (22, 23) is elasticated.

17. The device of claim 16, wherein each brace (22, 23) comprises indicating means (38) of a tension of the respective brace (22, 23).

18. The device of claim 17, wherein the indicating means (38) comprise a plurality of visible elements (38) arranged in succession along a longitudinal development of the brace (22, 23), and a guide sleeve (36, 37) destined to be blocked on the head-rest (104), in which guide sleeve (36, 37) the brace (22, 23) is slidably inserted.

19. A method for supporting a body of a person who is in a driving position of a vehicle, comprising steps of predisposing a device (10) as in any one of the preceding claims, fastening binding means (11) of the device to a trunk of a body, attaching connecting means (22, 23) to an head-rest (104) of the vehicle, which head-rest (104) is located higher than the trunk of the body when the driver (100) is in the driving position, applying the hood (31) over the head-rest (104), and tensioning the connecting means (22, 23) such as to cause at least a part of bodyweight of the driver (100) to depend on the head-rest (104) of the vehicle.

## Patentansprüche

1. Vorrichtung zum Halten des Körpers eines Fahrers (100) in einer Fahrposition eines Fahrzeugs, die Umfassungsmittel (11), die dafür gestaltet sind, am Rumpf eines Fahrerkörpers befestigt zu werden, und Verbindungsmittel (22, 23) umfasst, die dafür gestaltet sind, die Umfassungsmittel (11) mit einer Kopfstütze (104) eines Sitzes (103) eines Fahrzeugs zu verbinden, wobei die Kopfstütze (104) an einer höheren Position als der Rumpf des Fahrers angeordnet ist, wenn sich der Fahrer (100) in der Fahrposition befindet, und die dafür bestimmt sind, gespannt angeordnet zu werden, um mindestens einen Teil des Körpergewichts des Fahrers (100) an die Kopfstütze (104) des Fahrzeugs anzuhängen, wobei die Verbindungsmittel (22, 23) an Verankerungsmitteln (30) angeschlossen sind, die geeignet sind, lösbar an der Kopfstütze (104) des Fahrzeugs befestigt zu werden, **dadurch gekennzeichnet, dass** die Verankerungsmittel (30) eine Haube (31) umfassen, die geeignet ist, über die Kopfstütze (104) gezogen zu werden.

2. Vorrichtung nach Anspruch 1, wobei die Umfassungsmittel ein Band (11) umfassen, das dafür bestimmt ist, um den Rumpf des Fahrerkörpers gewunden zu werden.

3. Vorrichtung nach Anspruch 2, wobei das Band (11) elastisch ist.

4. Vorrichtung nach Anspruch 2, wobei das Band (11) offen ist und lösbare Befestigungsmittel (15, 16) umfasst, die dafür bestimmt sind, das Band in einer zum Ring gewundenen Schließstellung geschlossen zu halten.

5. Vorrichtung nach Anspruch 4, wobei die Befestigungsmittel (15, 16) derart justierbar sind, dass ein Umfang des zum Ring gewundenen Bandes variiert wird.

6. Vorrichtung nach Anspruch 2, die mindestens ein weiteres elastisches Element (17B, 17C, 18B, 18C), das hervorstehend am elastischen Band (11) befestigt ist, und lösbar zu befestigende Mittel (16, 19, 20, 21) umfasst, um ein freies Endes des weiteren elastischen Elements (17B, 17C, 18B, 18C) in justierbarer Position derart am elastischen Band (11) zu befestigen, dass das weitere elastische Element (17B, 17C, 18B, 18C) den Rumpf des Körpers zumindest teilweise umspannt.

7. Vorrichtung nach Anspruch 1, wobei die Verbindungsmittel (22, 23) dafür bestimmt sind, die Umfassungsmittel (11) mit einer Kopfstütze (104) eines Sitzes (101) des Fahrzeugs zu verbinden.

8. Vorrichtung nach Anspruch 1, wobei die Verbindungsmittel mindestens ein Stützband (22, 23) umfassen, das dafür bestimmt ist, von der Kopfstütze (104) herabzuhängen.

9. Vorrichtung nach Anspruch 8, wobei die Verbindungsmittel mindestens ein Paar Stützbänder (22, 23) umfassen, die dafür bestimmt sind, von der Kopfstütze (104) herabzuhängen.

10. Vorrichtung nach Anspruch 9, wobei die Stützbänder (22, 23) übereinander gekreuzt sind.

11. Vorrichtung nach Anspruch 8, wobei jedes Stützband (22, 23) gleitfähig an den Verankerungsmitteln (30) angeschlossen ist.

12. Vorrichtung nach Anspruch 11, wobei jedes Stützband (22, 23) gleitfähig in eine Führungshülse (36, 37) eingesetzt ist, die an der Haube (31) befestigt ist.

13. Vorrichtung nach Anspruch 12, wobei die Haube (31) mit einem Paar Führungshülsen (36, 37) ausgestattet ist, die jeweils an ein entsprechendes Stützband (22, 23) angeschlossen sind und einander überkreuzen.

14. Vorrichtung nach Anspruch 8, wobei jedes Stützband (22, 23) einen Abschnitt aufweist, der an den Umfassungsmitteln (11) befestigt ist, und außerdem einen freien Abschnitt, wobei lösbare Befestigungsmittel (26, 27, 28, 29) zum Befestigen des freien Abschnitts des Stützbandes (22, 23) an den Umfassungsmitteln (11) bereitgestellt sind.

15. Vorrichtung nach Anspruch 14, wobei die Befestigungsmittel (26, 27, 28, 29) derart justierbar sind, dass ein Punkt zum Befestigen des freien Abschnitts des Stützbandes (22, 23) an den Umfassungsmitteln (11) variabel ist.

16. Vorrichtung nach Anspruch 8, wobei jedes Stützband (22, 23) elastisch ist.

17. Vorrichtung nach Anspruch 16, wobei jedes Stützband (22, 23) Anzeigemittel (38) für eine Spannung des entsprechenden Stützbandes (22, 23) umfasst.

18. Vorrichtung nach Anspruch 17, wobei die Anzeigemittel (38) mehrere sichtbare Elemente (38), die entlang einer Längsausbildung des Stützbandes (22, 23) in Reihe angeordnet sind, und eine Führungshülse (36, 37) umfassen, die dafür bestimmt ist, an der Kopfstütze (104) arretiert zu werden, wobei das Stützband (22, 23) gleitfähig in die Führungshülse (36, 37) eingesetzt ist.

19. Verfahren zum Halten eines Körpers einer Person, die sich in Fahrposition eines Fahrzeugs befindet, umfassend die Schritte des Anordnens einer Vorrichtung (10) nach einem der vorhergehenden Ansprüche, des Befestigens von Umfassungsmitteln (11) der Vorrichtung am Rumpf eines Körpers, des Anbringens von Verbindungsmitteln (22, 23) an einer Kopfstütze (104) des Fahrzeugs, wobei die Kopfstütze (104) höher als der Rumpf des Körpers angeordnet ist, wenn sich der Fahrer (100) in Fahrposition befindet, des Ziehens der Haube (31) über die Kopfstütze (104) und des Spannens der Verbindungsmittel (22, 23) derart, dass mindestens ein Teil des Körpergewichts des Fahrers (100) an die Kopfstütze (104) des Fahrzeugs angehängt ist.

## Revendications

1. Dispositif pour supporter le corps d'un conducteur (100) dans une position de conduite d'un véhicule, comprenant des moyens d'attache (11) conçus pour être fixés au tronc du corps du conducteur et des moyens de connexion (22, 23) conçus pour connecter les moyens d'attache (11) à un appuie-tête (104) d'un siège (103) de véhicule, ledit appuie-tête (104) se trouvant dans une position plus élevée que le tronc du conducteur lorsque le conducteur (100) est en position de conduite, et étant destiné à être mis sous tension de telle façon qu'au moins une partie du poids du corps du conducteur (100) dépende de l'appuie-tête (104) du véhicule, dans lequel lesdits moyens de connexion (22, 23) sont associés à des moyens d'ancrage (30) adaptés pour être fixés de manière amovible à l'appuie-tête (104) du véhicule, **caractérisé en ce que** lesdits moyens d'ancrage (30) comprennent un capuchon (31) adapté pour être appliqué par-dessus l'appuie-tête (104).

2. Dispositif selon la revendication 1, dans lequel les moyens d'attache comprennent une bande (11) destinée à être enroulée autour du tronc du corps du conducteur.

3. Dispositif selon la revendication 2, dans lequel la bande (11) est élastique.

4. Dispositif selon la revendication 2, dans lequel la bande (11) est ouverte et comprend des moyens de fixation détachables (15, 16) destinés à maintenir la bande fermée dans une configuration de fermeture à enroulement annulaire.

5. Dispositif selon la revendication 4, dans lequel les moyens de fixation (15, 16) sont ajustables de manière à faire varier une circonférence de la bande à enroulement annulaire.

6. Dispositif selon la revendication 2, comprenant au moins d'autres éléments élastiques (17B, 17C, 18B, 18C) fixés par projection à la bande élastique (11), et des moyens de fixation détachables (16, 19, 20, 21) pour fixer une extrémité libre de l'autre élément élastique (17B, 17C, 18B, 18C) dans une position ajustable sur la bande élastique (11), de telle sorte que l'autre élément élastique (17B, 17C, 18B, 18C) enveloppe au moins partiellement le tronc du corps.

7. Dispositif selon la revendication 1, dans lequel les moyens de connexion (22, 23) sont destinés à connecter les moyens d'attache (11) à un appuie-tête (104) d'un siège (101) du véhicule.

8. Dispositif selon la revendication 1, dans lequel les moyens de connexion comprennent au moins une bretelle (22, 23) destinée à être suspendue de l'appuie-tête (104).

9. Dispositif selon la revendication 8, dans lequel les moyens de connexion comprennent au moins une paire de bretelles (22, 23) destinées à être suspendues de l'appuie-tête (104).

10. Dispositif selon la revendication 9, dans lequel les bretelles (22, 23) sont croisées l'une sur l'autre.

11. Dispositif selon la revendication 8, dans lequel chaque bretelle (22, 23) est associée de manière coulissante auxdits moyens d'ancrage (30).

12. Dispositif selon la revendication 11, dans lequel chaque bretelle (22, 23) est insérée de manière coulissante dans un manchon de guidage (36, 37) qui est fixé au capuchon (31).

13. Dispositif selon la revendication 12, dans lequel le capuchon (31) est pourvu d'une paire de manchons de guidage (36, 37), qui sont associés chacun à une bretelle respective (22, 23) et sont croisés l'un sur l'autre.

14. Dispositif selon la revendication 8, dans lequel chaque bretelle (22, 23) comporte une partie qui est fixée aux moyens d'attache (11) ainsi qu'une partie libre, des moyens de fixation détachables (26, 27, 28, 29) étant pourvus pour fixer la partie libre de la bretelle (22, 23) aux moyens d'attache (11).

15. Dispositif selon la revendication 14, dans lequel les moyens de fixation (26, 27, 28, 29) sont ajustables de manière à faire varier un point de fixation de la partie libre de la bretelle (22, 23) aux moyens d'attache (11).

16. Dispositif selon la revendication 8, dans lequel chaque bretelle (22, 23) est élastique.

17. Dispositif selon la revendication 16, dans lequel chaque bretelle (22, 23) comprend des moyens d'indication (38) d'une tension de la bretelle respective (22, 23).

18. Dispositif selon la revendication 17, dans lequel les moyens d'indication (38) comprennent une pluralité d'éléments visibles (38) agencés successivement le long d'un développement longitudinal de la bretelle (22, 23) et un manchon de guidage (36, 37) destiné à être bloqué sur l'appuie-tête (104), la bretelle (22, 23) étant insérée de manière coulissante dans ledit manchon de guidage (36, 37).

19. Procédé pour supporter le corps d'une personne qui se trouve dans une position de conduite d'un véhicule, comprenant les étapes consistant à pré-agencer un dispositif (10) comme dans l'une quelconque des revendications précédentes, à fixer des moyens d'attache (11) du dispositif au tronc d'un corps, à attacher des moyens de connexion (22, 23) à un appuie-tête (104) du véhicule, ledit appuie-tête (104) se trouvant plus haut que le tronc du corps lorsque le conducteur (100) est en position de conduite, à appliquer le capuchon (31) par-dessus l'appuie-tête (104), et à mettre les moyens de connexion (22, 23) sous tension de manière à ce qu'au moins une partie du poids du corps du conducteur (100) dépende de l'appuie-tête (104) du véhicule.
